# EUROPÄISCHE PATENTSCHRIFT

(11) **EP 3 418 833 B1**
(45) Veröffentlichungstag und Bekanntmachung des Hinweises auf die Patenterteilung: **07.04.2021**
(21) Anmeldenummer: 17176913.6
(22) Anmeldetag: 20.06.2017
(51) Int. Cl.: G05B 19/418

(54) **VERFAHREN UND ANORDNUNG ZUM ZUGRIFF EINES ERSTEN COMPUTERS AUF EINE VIRTUELLE MASCHINE EINES ZWEITEN COMPUTERS**
METHOD AND ASSEMBLY FOR ENABLING ACCESS FROM A FIRST COMPUTER TO A VIRTUAL MACHINE OF A SECOND COMPUTER
PROCÉDÉ ET SYSTÈME D'ACCÈS D'UN PREMIER ORDINATEUR À UNE MACHINE VIRTUELLE D'UN SECOND ORDINATEUR

(43) Veröffentlichungstag der Anmeldung: 26.12.2018
(73) Patentinhaber: Siemens Aktiengesellschaft, 80333 München (DE)
(72) Erfinder: Füßlein, Wolfgang, 76879 Essingen (DE); Gaugler, Tobias, 76189 Karlsruhe (DE); Kohler, Felix, 76470 Ötigheim (DE)

(56) Entgegenhaltungen:
- EP-A1- 2 801 941
- EP-A2- 1 283 632
- DE-A1-102012 205 907
- Microsoft Corp.: "Remote Desktop Services virtual channels (Windows)", , 12. Oktober 2016 (2016-10-12), XP055404584, Gefunden im Internet: URL:https://web.archive.org/web/2016101209 1543/https://msdn.microsoft.com/en-us/libr ary/aa383509(v=vs.85).aspx [gefunden am 2017-09-07]

## Beschreibung

Die Erfindung betrifft ein Verfahren zum Zugriff eines ersten Computers auf zumindest eine auf einer virtuellen Maschine eines zweiten Computers installierte Anwendung gemäß dem Oberbegriff des Patentanspruchs 1, und eine Anordnung mit einem ersten Computer und einem zweiten Computer mit einer virtuellen Maschine gemäß dem Oberbegriff des Patentanspruchs 8.

In industriellen Automatisierungsanordnungen werden gebräuchlicherweise speicherprogrammierbare Steuerungen (PLC-Programmable Logic Controller) oder Bedien- und Beobachtungsgeräte (HMI - Human Machine Interface) betrieben, die für ihre Verwendung mit einer Software programmiert werden müssen. Zur Programmierung dieser Geräte und zu deren Wartung werden in den Automatisierungsnetzwerken sogenannte Programmiergeräte eingesetzt, die beispielsweise aus einem Personal-Computer mit einer entsprechenden Kontrollsoftware bestehen. Diese sind über eine proprietäre Netzwerkverbindung, dem Automatisierungsnetzwerk, mit den speicherprogrammierbaren Steuerungen, Bedien- und Beobachtungsgräten und anderen aktiven Automatisierungskomponenten verbunden.

Die für den Betrieb der speicherprogrammierbaren Steuerungen und der Bedien- und Beobachtungsgeräte erforderliche Software wird mit einem Engineering-System erstellt und direkt von dieser oder mittels des bereits beschriebenen Programmiergerätes auf die Ziel-Hardware geladen. Oft ist das Engineering-System klassischerweise entweder auf dem Programmiergerät installiert, oder aber mit dem Programmiergerät verbunden, insbesondere über eine Netzwerkverbindung.

Die für eine solche Konstellation erforderliche geografische oder räumliche Nähe zwischen dem Programmiergerät und dem Engineering-System ist insbesondere bei größeren Automatisierungsanordnungen oder gar standortübergreifend oft nicht gegeben. Insbesondere ist es oft erforderlich, dass das Programmiergerät und das Engineering-System über ein Weitverkehrsnetzwerk, also ein Intranet oder das Internet, miteinander kommunizieren. Dies ist insbesondere dann der Fall, wenn die Dienstleistung des Engineerings oder Teile davon, beispielsweise das Kompilieren, als ein Dienst in einem öffentlichen Netz bereitgestellt werden; in diesem Zusammenhang spricht man auch von einer "Cloud". Bei solchen Konstellationen ist das Engineering-System oft nicht direkt auf einem Computer installiert, sondern in einer virtuellen Maschine, was wesentliche Vorteile bei der Bereitstellung und Skalierung eines Dienstes mit sich bringt.

Nachteilig an der geschilderten Verteilung der Systeme und der damit verbundenen Notwendigkeit der Kommunikation über ein Weitverkehrsnetzwerk, insbesondere das Internet, ist die Tatsache, dass eine Vielzahl von einzelnen Verbindungen zwischen dem Programmiergerät und der virtuellen Maschine mit dem Engineering-System etabliert werden müssen. Grund dafür ist unter anderem, dass die bekannten Engineering-Systeme dazu eingerichtet sind, direkt mittels einer lokalen Schnittstelle des Computers, auf dem sie ablaufen, auf die speicherprogrammierbaren Steuerungen bzw. auf die Bedien- und Beobachtungsgeräte zuzugreifen. Sofern nun ein Bediener, der ein lokales Programmiergerät benutzt, auf die Funktionen des Engineering-Systems zugreifen möchte, muss also nicht nur eine Fern-Bedienungssitzung zur Benutzung des entfernt installierten Engineering-Systems geschaffen werden, sondern es müssen weiterhin Verbindungen dafür bereitgestellt werden, dass das Engineering-System gleichzeitig Daten mit den speicherprogrammierbaren Steuerungen bzw. Bedien- und Beobachtungsgeräten austauschen kann.

Während die reine Benutzung des entfernt installierten Engineering-Systems mittels eines gebräuchlichen "Fernsteuer-Protokolls" geschieht, insbesondere mittels des Remote-Desktop-Protocols (RDP) der Firma Microsoft, ist es für den gleichzeitig notwendigen Zugriff des Engineering-Systems mit der Ziel-Hardware notwendig, weitere Kommunikationskanäle über das Weitverkehrsnetzwerk (Internet) zu etablieren. Dazu ist es gebräuchlich, sowohl auf dem Computer mit der virtuellen Maschine und dem darauf ablaufenden Engineering-System als auch auf dem Computer mit dem Programmiergerät jeweils eine Steuerungssoftware zu installieren, die entsprechende Kanäle verwaltet und die entsprechenden Informationen über das Weitverkehrsnetzwerk austauscht. In Anlehnung auf die beschriebene Verfügbarkeit der Dienste in dem Netzwerk ("Cloud") wird diese zusätzliche Software auch als "Cloud-Connector" bezeichnet.

Die Druckschrift DE 10 2012 205 907 A1 - Bauer "System und Verfahren zur Maschinenwartung" offenbart eine Anordnung und ein Verfahren, bei dem eine virtuelle Maschine zur Wartung einer realen Maschine eingesetzt wird. Mit der virtuellen Maschine sind die reale Maschine, ein Rechner mit einem Arbeitsplatz und ein Applikationsserver jeweils verbunden.

Eine Beschreibung des Remote Desktop Protocol (RDP) ist in https://msdn.microsoft.com/en-us/library/aa383015(d=printer).aspx angegeben.

Die Veröffentlichung Microsoft Corp.: "Remote Desktop Services virtual channels (Windows)" beschreibt die Erweiterung des RDP-Protokolls mit virtuellen Kanälen.

Kurz gesagt muss beim Einsatz von virtuellen Maschinen in einer privaten Netzwerkumgebung ("Cloud") in Verbindung mit einer realen Automatisierungshardware, die an einem Bedienplatz (Programmiergerät, Personal-Computer) angeschlossen ist, ein Anwender manuell mehrere Verbindungen unterschiedlichen Typs zwischen dem "realen" Personal-Computer (Programmiergerät) und der virtuellen Maschine (Engineering-System) aufbauen. Dies ist in der Regel ein sehr komplexer Vorgang, da die üblichen Sicherheitsmechanismen der dabei verwendeten Netzwerktechnik, insbesondere von Routern und anderen aktiven Netzwerkkomponenten, in der Regel so konfiguriert sind, dass solche Verbindungen nicht aufgebaut werden können bzw. das zum Aufbau der Verbindungen entsprechende Freischaltungen in der Sicherheitstechnik, insbesondere in den sogenannten "Firewalls", konfiguriert werden müssen. Insbesondere bei der Verwendung von öffentlichen Netzwerken, beispielsweise dem Internet, ist es manchmal so gut wie unmöglich, die entsprechend benötigten virtuellen Kanäle ("Ports") durchgängig freizuschalten.

Es ist also eine Aufgabe der vorliegenden Erfindung, die notwendige mehrkanalige Kommunikation zwischen der virtuellen Maschine und dem Programmiergerät auch in Netzwerken mit strengen Sicherheitsanforderungen zu gewährleisten.

Die erfindungsgemäße Lösung der Aufgabe macht sich zunutze, dass das bereits beschriebene Remote-Desktop-Protocol für die Fernsteuerung von Computern über ein Netzwerk nur wenige, in der Regel ohnehin schon freigegebene Ports verwendet. Erfindungsgemäß soll ein virtueller Kanal (virtual channel) der Remote-Desktop-Verbindung dazu verwendet werden, die Kommunikationsbeziehungen der Hardware-Schnittstellen des Programmiergerätes über die Netzwerkverbindung der virtuellen Maschine mit dem Engineering-System genauso zur Verfügung zu stellen, als wären die benannten Kommunikationsbeziehungen und -kanäle lokale Beziehungen der virtuellen Maschine. Während klassischerweise das Remote-Desktop-Protocol nur Hardware-gestützte Dienste wie Tastatur-Dienst, Mouse-Dienst, Drucker-Dienst und direkte Hardware-Schnittstellen wie z.B. USB-Ports dem RDP-Server, also dem ferngesteuerten Computer, zur Verfügung stellen kann und keinen Zugriff auf die entsprechenden vorkonfigurierten Kommunikationsdienste des Client-Computers anbieten kann, wird erfindungsgemäß durch die "Tunnelung" der speziellen Kommunikationsbeziehungen zwischen der virtuellen Maschine und dem Engineering-System ein direkter, sicherer Zugriff auf die an dem Programmiergerät angeschlossene Peripherie und damit auch auf die zu programmierenden speicherprogrammierbaren Steuerungen bzw. Bedien- und Beobachtungsgeräte gegeben. Dadurch, dass die Informationen der Kommunikationsbeziehungen komplett innerhalb der Remote-Desktop-Verbindung in einem virtuellen Kanal übertragen werden, müssen keine weiteren Ports in Firewalls freigeschaltet werden, sondern es genügt, dass die praktisch immer funktionsfähige Remote-Desktop-Verbindung etabliert werden kann. Es wird also nicht einfach die Schnittstelle, über die mit der PLC kommuniziert wird, in der virtuellen Maschine mit dem Engineering-System angezeigt bzw. in die virtuelle Maschine "gemappt", vielmehr wird jegliche über diese Schnittstelle mögliche Kommunikation über diese Schnittstelle in der virtuellen Maschine ermöglicht - z.B. PROFIBUS, DCP, etc. Das ist ein Unterschied zu beispielsweise einer per RDP in die virtuelle Maschine gemappten USB-Schnittstelle, über die auch beispielsweise USB-Ethernet Adapter oder PROFIBUS-Adapter gemappt werden könnten. Die speziellen Informationen und Konfigurationen zur Nutzung der Schnittstelle verbleiben also seitens des Programmiergerätes, an dem die PLC angeschlossen ist. Außerdem sind die den Kommunikationsbeziehungen unterlagerten Hardware-Schnittstellen durch dieses Vorgehen nicht allgemein in der virtuellen Maschine sichtbar (z.B. in einem Geräte-Manager des Betriebssystems), sondern exklusiv durch die Engineering-Software nutzbar.

Die Aufgabe wird insbesondere durch ein Verfahren gemäß Patentanspruch 1 und durch eine Anordnung gemäß Patentanspruch 8 gelöst.

Dabei wird ein Verfahren zum Zugriff eines ersten Computers auf zumindest eine auf einer virtuellen Maschine eines zweiten Computers installierte Anwendung über eine Netzwerkverbindung vorgeschlagen, wobei als der erste Computer ein Programmiergerät einer industriellen Automatisierungsanordnung verwendet wird, wobei das Programmiergerät mittels eines Automatisierungsnetzwerkes mit zumindest einer industriellen Steuerung verbunden ist, wobei mittels des Programmiergerätes (PG) und mittels einer Schnittstellenverbindung die zumindest eine Anwendung auf die zumindest eine industrielle Steuerung zugreift, und wobei in einem ersten Schritt von dem ersten Computer zu der virtuellen Maschine eine Remote-Desktop-Protocol-Verbindung aufgebaut wird. Dabei wird in einem zweiten Schritt von der virtuellen Maschine zu dem ersten Computer über einen virtuellen Kanal der Remote-Desktop-Protocol-Verbindung die Schnittstellenverbindung aufgebaut, wobei der zumindest einen Anwendung mittels der Schnittstellenverbindung zumindest eine Kommunikationsbeziehung des ersten Computers zu der zumindest einen industriellen Steuerung als eine lokale Kommunikationsbeziehung der Anwendung zur Verfügung gestellt wird. Dadurch muss aus Anwendersicht nur noch mittels des Remote-Desktop-Protocols genau eine Verbindung zu der virtuellen Maschine aufgebaut werden, wobei die benötigten Rückkanäle automatisch aufgebaut werden können und wobei keine Sicherheitseinstellungen in Firewalls oder Routern verändert werden müssen.

Die Aufgabe wird außerdem durch eine Anordnung gelöst, in der das geschilderte Verfahren zur Anwendung kommt. Dabei wird eine Anordnung mit einem ersten Computer und einem zweiten Computer mit einer virtuellen Maschine vorgeschlagen, wobei auf der virtuellen Maschine zumindest eine Anwendung installiert ist, wobei der erste Computer ein Programmiergerät einer industriellen Automatisierungsanordnung ist, wobei das Programmiergerät mittels eines Automatisierungsnetzwerkes mit zumindest einer industriellen Steuerung verbunden ist, wobei mittels des Programmiergerätes und mittels einer Schnittstellenverbindung die zumindest eine Anwendung auf die zumindest eine industrielle Steuerung zugreift, und wobei ein Zugriff des ersten Computers auf die zumindest eine Anwendung über eine Netzwerkverbindung vorgesehen ist, wobei vorgesehen ist, dass in einem ersten Schritt von dem ersten Computer zu der virtuellen Maschine eine Remote-Desktop-Protocol-Verbindung aufgebaut wird. Dabei ist weiter vorgesehen, dass in einem zweiten Schritt von der virtuellen Maschine zu dem ersten Computer über einen virtuellen Kanal der Remote-Desktop-Protocol-Verbindung der zumindest einen Anwendung zumindest eine Kommunikationsbeziehung des ersten Computers zu der industriellen Steuerung als eine lokale Kommunikationsbeziehung zur Verfügung gestellt wird. Mittels einer solchen Anordnung können die bereits anhand des Verfahrens diskutierten Vorteile erzielt werden.

Vorteilhafte Ausgestaltungen des erfindungsgemäßen Verfahrens sind in den abhängigen Patentansprüchen angegeben. Die dabei beschriebenen Merkmale und Vorteile können sowohl einzeln, als auch in Kombination miteinander verwirklicht werden. Die Ausgestaltungen des erfindungsgemäßen Verfahrens gelten sinngemäß auch für die erfindungsgemäße Anordnung.

Vorteilhaft wird vor dem ersten Schritt auf dem ersten Computer und auf der virtuellen Maschine je eine Software zur Verwaltung der über den virtuellen Kanal zu übertragenden Informationen der Schnittstellenverbindung installiert. Damit ist es möglich, nach einer Initiierung der Remote-Desktop-Protocol-Verbindung die Schnittstellenverbindung über den virtuellen Kanal automatisch aufzubauen, ohne dass ein Benutzer diese manuell konfigurieren muss. Dabei wird durch die auf dem ersten Computer installierte Software ("Cloud Connector") die zumindest eine Kommunikationsbeziehung zu der zumindest einen industriellen Steuerung detektiert und mittels des virtuellen Kanals (RDP-VC) der auf dem zweiten Computer installierten Software zugreifbar gemacht, und die auf dem zweiten Computer installierte Software macht diese zumindest eine Kommunikationsbeziehung der Anwendung zugreifbar. Vorteilhaft ist die auf dem ersten und dem zweiten Computer installierte Software ("Cloud Connector") identisch und kann je nach Konfiguration als Server oder als Client wirken, allerdings sind auch unterschiedliche Versionen der Software für den ersten und für den zweiten Computer möglich. In einer vorteilhaften Variante weisen der erste und der zweite Computer jeweils ein Betriebssystem mit jeweils einer Betriebssystem-Erweiterung (z.B. "S7DOS" der Siemens AG) auf, wobei die auf dem ersten Computer installierte Software an die Betriebssystem-Erweiterung des ersten Computers und die auf dem zweiten Computer installierte Software an die Betriebssystem-Erweiterung des zweiten Computers angebunden sind.

Vorteilhaft wird der virtuelle Kanal oder ein anderer virtueller Kanal der Remote-Desktop-Verbindung zum Zugriff der zumindest einen Anwendung auf einen Serverdienst des ersten Computers oder eines anderen Computers verwendet. Ein solcher Serverdienst kann insbesondere vorteilhaft ein Dienst zur Bereitstellung von Lizenzen, insbesondere für Lizenzen zur Nutzung der zumindest einen Anwendung, sein. Weiterhin können über den virtuellen Kanal oder andere virtuelle Kanäle der Remote-Desktop-Verbindung auch Verbindungen zu anderen Servern, insbesondere zu Alarm-Servern, aufgebaut werden, die dann wie ein lokal zur Verfügung gestellter Server oder Dienst von der Anwendung verwendet werden können.

Vorteilhaft wird als die zumindest eine Anwendung ein Engineering-System für industrielle Automatisierungsanordnungen verwendet, insbesondere eine Portal-Anwendung zum Zugriff auf eine Vielzahl von Engineering-Diensten (z. B. "TIA-Portal" der Siemens AG).

Ein Ausführungsbeispiel des erfindungsgemäßen Verfahrens wird nachfolgend anhand der Zeichnung erläutert. Es dient gleichzeitig zur Erläuterung einer erfindungsgemäßen Anordnung.

Dabei zeigen:
- Figur 1: in einer schematischen Darstellung ein Programmiergerät mit einer angebundenen speicherprogrammierbaren Steuerung, wobei das Programmiergerät mittels einer Remote-Desktop-Verbindung mit einer virtuellen Maschine mit einem Engineering-System verbunden ist, und
- Figur 2: in einer schematischen Darstellung den Informationsfluss und den Aufbau der virtuellen Schnittstellenverbindung der Remote-Desktop-Verbindung der Anordnung aus Figur 1.

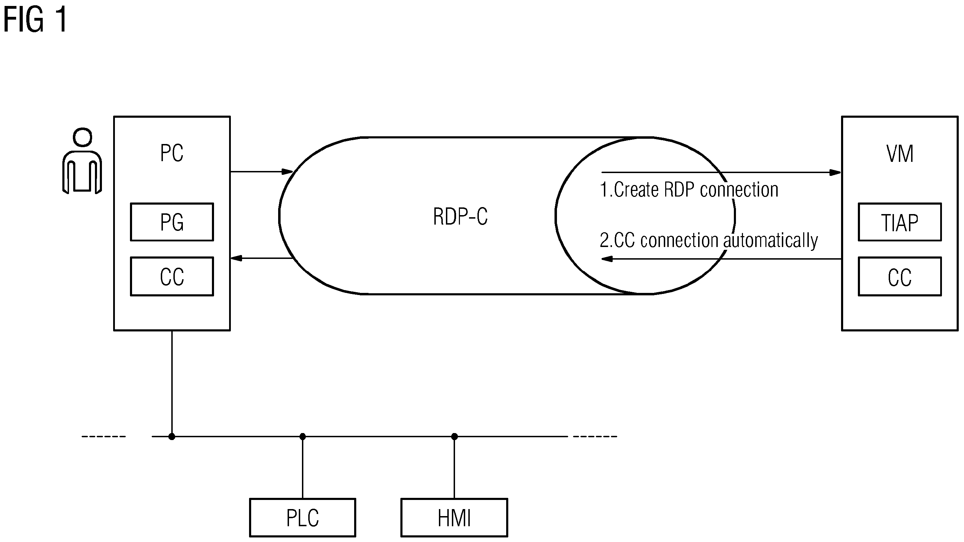

In der Figur 1 ist schematisch ein Personal-Computer PC dargestellt, welcher ein Arbeitsplatz für eine Bedienperson ist, wobei der Personal-Computer PC durch eine entsprechende Anwendung als ein Programmiergerät PG für eine industrielle Automatisierungsanordnung ausgestaltet ist. Mit einer lokalen Hardware-Schnittstelle, insbesondere eine für Automatisierungsnetzwerke geeignete Schnittstelle wie z. B. Profibus, Profinet, Industrial Ethernet oder andere, ist der Personal-Computer PC und somit das damit eingerichtete Programmiergerät PG mit einer speicherprogrammierbaren Steuerung PLC und einem Bedien- und Beobachtungsgerät HMI verbunden; diese Geräte stehen stellvertretend für eine Vielzahl unterschiedlicher Automatisierungskomponenten.

Der Personal-Computer PC ("erster Computer") ist weiterhin vorteilhaft über eine weitere Hardware-Schnittstelle, z. B. eine Ethernet-Schnittstelle oder eine WLAN-Schnittstelle, mit einem weiteren Netzwerk verbunden, beispielsweise ein Intranet oder das Internet. Grundsätzlich kann über diese Netzwerkverbindung der Personal-Computer PC und damit das Programmiergerät PG mit einem weiteren, zweiten Computer Daten austauschen, wobei dieser weitere, zweite Computer eine virtuelle Maschine VM aufweist, wobei als eine Anwendung auf der virtuellen Maschine VM eine Engineering-Software TIAP (z.B. "TIA Portal" der Siemens AG) abläuft. Die Engineering-Software TIAP (auch "Engineering-System" genannt) dient dabei der Planung und insbesondere auch der Programmierung von industriellen Komponenten, insbesondere der speicherprogrammierbaren Steuerung PLC und des Bedien- und Beobachtungsgeräts HMI.

Die Engineering-Software TIAP ist dabei nicht nur dazu eingerichtet, die für den Betrieb der speicherprogrammierbaren Steuerung PLC bzw. des Bedien- und Beobachtungsgerätes HMI erforderliche Software zu erstellen, also einen Editor zu der Erstellung des Programms und einen Compiler etc. zur Generierung des ausführbaren Codes zu betreiben, sondern auch, um über eine lokale Kommunikationsbeziehung, die beispielsweise eine lokale Hardware-Schnittstelle zu dem Automatisierungs-Netzwerk verwendet, den erzeugten ausführbaren Code und andere Daten auf die entsprechende Ziel-Hardware (PLC, HMI) zu übertragen. Während dazu in der Vergangenheit häufig die Engineering-Software TIAP lokal auf dem Personal-Computer PC mit der direkten Anbindung an die Ziel-Hardware (PLC, HMI) installiert worden ist, ist es häufig gewünscht, den "Dienst" des Engineerings in einem Netzwerk zur Verfügung zu stellen; man spricht auch von "Cloud-Engineering". Dabei verwendet der Benutzer den Personal-Computer PC mit dem Programmiergerät PG, um auf die Funktionalität der Engineering-Software TIAP über ein Netzwerk, beispielsweise das Internet, zuzugreifen. Bei der hier vorliegenden Ausführungsform ist dabei vorgesehen, dass die Engineering-Software TIAP komplett auf der virtuellen Maschine VM abläuft und über einen Terminal-Dienst von dem entfernten Standort des Personal-Computers PC aus verwendet wird.

Dazu wird zunächst von dem Personal-Computer PC zu der virtuellen Maschine VM eine Terminal-Verbindung etabliert, und zwar im vorliegenden Fall eine Verbindung RDP-C gemäß dem Remote-Desktop-Protocol der Firma Microsoft. Dies ist in den Figuren durch Pfeile mit der Beschriftung "1. Create RDP connection" dargestellt.

Mittels der Verbindung RDP-C ist es nun bereits möglich, dass der Benutzer die Engineering-Software TIAP fernbedient, d.h., dass einige lokale Dienste des Personal-Computers PC wie z. B. der Tastatur-Dienst, der Mouse-Dienst, der Drucker-Dienst über die Verbindung RDP-C auf die virtuelle Maschine VM wirken und im Gegenzug Bildschirmausgaben der virtuellen Maschine VM auf dem Personal-Computer PC ausgegeben werden.

Auf dem Personal-Computer PC und auf der virtuellen Maschine VM ist jeweils noch eine Software CC ("Cloud-Connector") installiert, wobei die Software CC sowohl eine Server-Komponente als auch eine Client-Komponente aufweist. Es sei hier exemplarisch angenommen, dass auf der virtuellen Maschine VM die Client-Komponente und auf dem Personal-Computer PC die Server-Komponente der Software CC verwendet wird; von dieser Konvention kann jedoch auch abgewichen werden. Die Software CC ist dabei jeweils an eine Betriebssystem-Erweiterung (z.B. "S7DOS" der Siemens AG) des jeweiligen Computers angebunden. Diese Betriebssystem-Erweiterung stellt dem Programmiergerät PG des ersten Computers die Kommunikationsbeziehungen zu den Automatisierungsgeräten bereit. Auf dem zweiten Computer ist die Erweiterung für den Fall, dass die Anwendung direkt mit einem Automatisierungsgerät, z.B. mit einer speicherprogrammierbare Steuerung PLC, kommunizieren soll, ebenfalls zur Bereitstellung der Kommunikationsbeziehung über eine lokale Hardware-Schnittstelle des zweiten Computers zuständig, d.h., dass weder die Anwendung des zweiten Computers noch das Programmiergerät, also eine Anwendung des ersten Computers, direkt auf lokale Hardware-Schnittstellen zugreifen, sondern immer mittels der jeweiligen Betriebssystem-Erweiterung. Dies steht im Gegensatz zu einem direkten "mapping" von Hardware-Schnittstellen zu der virtuellen Maschine VM, die diese Schnittstellen dann allen dort installierten Anwendungen sichtbar machen würde, was u.a. aus Sicherheitsgründen nicht gewünscht ist.

In einem nächsten Schritt baut nun die Client-Komponente der Software CC eine weitere Verbindung ("CC connection") automatisch zu ihrem Gegenstück (Server-Komponente) des Personal-Computers PC auf.

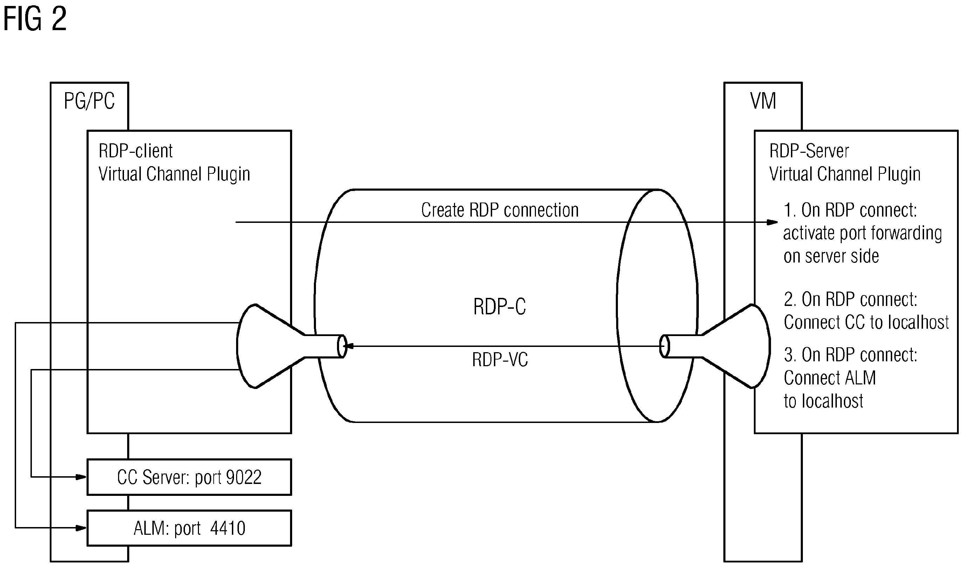

Die Figur 2 zeigt in einer detaillierten Sicht diesen Vorgang. Die Software CC benutzt für die weitere Verbindung ("CC connection") einen virtuellen Kanal, der von einem Zusatzmodul der RDP-Funktionalität (RDP-Server, RDP-Client) zur Verfügung gestellt wird, nämlich das "Virtual Channel Plugin". Diese zusätzliche Verbindung ist in der Figur 2 mit dem Bezugszeichen RDP-VC ("Remote Desktop Protocol - Virtual Channel") bezeichnet. Die dabei entstandene Verbindung wird auf Seiten der virtuellen Maschine VM an die lokale Host-Schnittstelle ("Local Host") angebunden und steht dort in Form einer lokalen Hardware-Schnittstelle, insbesondere in Form einer lokalen Ethernet-Schnittstelle, der Betriebssystem-Erweiterung ("S7DOS") und somit indirekt der Engineering-Software TIAP zur Verfügung. Dies bedeutet, dass die somit in die virtuelle Maschine des zweiten Computers "verlängerte" Kommunikationsbeziehung des ersten Computers nicht allen Anwendungen des zweiten Computers zur Verfügung steht, sondern nur den auf der Erweiterung ("S7DOS") aufgesetzten Anwendungen (hier: Engineering-System TIAP).

Auf Seiten des Personal-Computers PC bzw. des damit gebildeten Programmiergerätes PG wird die virtuelle Verbindung RDP-VC mittels der Software CC ebenfalls an eine lokale Hardware-Schnittstelle angebunden, nämlich an die lokale Erweiterung des Betriebssystems ("S7DOS") und somit indirekt an die Verbindung (Hardware-Schnittstelle)zum lokalen Automatisierungsnetzwerk, mit dem auch die speicherprogrammierbare Steuerung PLC und das Bedien- und Beobachtungsgerät HMI angeschlossen sind. Mittels der Software CC bzw. deren Serveranteil des Personal-Computers PC ist somit ein Zugriff der Engineering-Software TIAP auf die zu programmierende Ziel-Hardware PLC, HMI möglich. Weiterhin ist es optional möglich, über die virtuelle Verbindung RDP-VC andere Server an die Engineering-Software TIAP anzubinden, insbesondere einen Lizenz-Server ALM (Automation License Manager).

Zur Bedienung kann ein Anwender an dem Personal-Computer PC und somit dem damit gebildeten Programmiergerät PG in der Konfiguration der Software CC konfigurieren, dass eine RDP-Verbindung verwendet werden soll. Bei jedem Aufbau einer RDP-Verbindung zur virtuellen Maschine VM wird eine Verbindung zwischen dem Server-Anteil und dem Client-Anteil der Software CC, eine sogenannte "CC-Verbindung", automatisch zurück zum Personal-Computer PC bzw. Programmiergerät PG aufgebaut. Optional kann automatisch eine weitere "getunnelte" Verbindung zur Nutzung eines Lizenz-Managers ALM von der virtuellen Maschine VM zum Programmiergerät PG bzw. einen dort installierten Lizenz-Server ALM aufgebaut werden. Dies hat den Vorteil, dass keine Lizenzen in der virtuellen Maschine VM eingespielt bzw. bevorratet werden müssen und macht eine automatische Konfiguration der Lizenzen möglich. Die virtuelle Verbindung RDP-VC kann auch für andere Dienste wie Zeit-Service, Datei-Service etc. verwendet werden.

Durch die Nutzung der in aller Regel auch in öffentlichen Netzwerken funktionstüchtigen bzw. freigegebenen RDP-Verbindungen und den damit möglichen bzw. darin "getunnelten" virtuellen RDP-Kanälen (mittels des "Virtual Channel Plugin") können zusätzliche Verbindungen innerhalb der RDP-Verbindung automatisch und vorkonfiguriert aufgebaut werden. Darüber hinaus werden keine weiteren Veränderungen an Sicherheitseinstellungen, insbesondere Öffnen zusätzlicher Ports in Firewalls, notwendig. Aus Anwendersicht muss nur noch per "Remote-Desktop-Protocol"-Verbindung genau eine Verbindung zur virtuellen Maschine VM aufgebaut werden.

## Patentansprüche

1. Verfahren zum Zugriff eines ersten Computers (PC) auf zumindest eine auf einer virtuellen Maschine (VM) eines zweiten Computers installierte Anwendung über eine Netzwerkverbindung,
wobei als der erste Computer (PC) ein Programmiergerät (PG) einer industriellen Automatisierungsanordnung verwendet wird, wobei das Programmiergerät (PG) mittels eines Automatisierungsnetzwerkes mit zumindest einer industriellen Steuerung (PLC) verbunden ist,
wobei mittels des Programmiergerätes (PG) und mittels einer Schnittstellenverbindung die zumindest eine Anwendung auf die zumindest eine industrielle Steuerung (PLC) zugreift, und wobei in einem ersten Schritt von dem ersten Computer (PC) zu der virtuellen Maschine (VM) eine Remote-Desktop-Protocol - RDP - Verbindung (RDP-C) aufgebaut wird,
**dadurch gekennzeichnet,**
**dass** in einem zweiten Schritt von der virtuellen Maschine (VM) zu dem ersten Computer (PC) über einen virtuellen Kanal (RDP-VC) der Remote-Desktop-Protocol - RDP - (RDP-C) Verbindung der zumindest einen Anwendung zumindest eine Kommunikationsbeziehung des ersten Computers (PC) zu der industriellen Steuerung (PLC) als eine lokale Kommunikationsbeziehung zur Verfügung gestellt wird.

2. Verfahren nach Patentanspruch 1,
**dadurch gekennzeichnet,**
**dass** vor dem ersten Schritt auf dem ersten Computer (PC) und auf der virtuellen Maschine (VM) je eine Software (CC) zur Verwaltung der über den virtuellen Kanal (RDP-VC) zu übertragenden Informationen der Kommunikationsbeziehung installiert wird.

3. Verfahren nach Patentanspruch 2,
**dadurch gekennzeichnet,**
**dass** durch die auf dem ersten Computer installierte Software (CC) die zumindest eine Kommunikationsbeziehung zu der zumindest einen industriellen Steuerung detektiert und mittels des virtuellen Kanals (RDP-VC) der auf dem zweiten Computer installierten Software (CC) zugreifbar gemacht wird, und
**dass** die auf dem zweiten Computer installierten Software (CC) diese zumindest eine Kommunikationsbeziehung der Anwendung zugreifbar macht.

4. Verfahren nach Patentanspruch 3,
**dadurch gekennzeichnet,**
**dass** der erste und der zweite Computer jeweils ein Betriebssystem mit jeweils einer Betriebssystem-Erweiterung aufweisen, wobei die auf dem ersten Computer installierte Software (CC) an die Betriebssystem-Erweiterung des ersten Computers und die auf dem zweiten Computer installierte Software (CC) an die Betriebssystem-Erweiterung des zweiten Computers angebunden sind.

5. Verfahren nach einem der vorhergehenden Patentansprüche,
**dadurch gekennzeichnet,**
**dass** der virtuelle Kanal (RDP-VC) oder ein anderer virtueller Kanal (RDP-VC) der Remote Desktop Verbindung - RDP - (RDP-C) zum Zugriff der zumindest einen Anwendung auf einen Serverdienst des ersten Computers (PC) verwendet wird.

6. Verfahren nach Patentanspruch 5,
**dadurch gekennzeichnet,**
**dass** als der Serverdienst ein Dienst zur Bereitstellung von Lizenzen, insbesondere für Lizenzen zur Nutzung der zumindest einen Anwendung, verwendet wird.

7. Verfahren nach einem der vorhergehenden Patentansprüche,
**dadurch gekennzeichnet,**
**dass** als die zumindest eine Anwendung ein Engineering-System (TIAP) für industrielle Automatisierungsanordnungen verwendet wird.

8. Anordnung mit einem ersten Computer (PC) und einem zweiten Computer mit einer virtuellen Maschine (VM),
wobei auf der virtuellen (VM) Maschine zumindest eine Anwendung installiert ist,
wobei der erste Computer (PC) ein Programmiergerät (PG) einer industriellen Automatisierungsanordnung ist, wobei das Programmiergerät (PG) mittels eines Automatisierungsnetzwerkes mit zumindest einer industriellen Steuerung (PLC) verbunden ist,
wobei mittels des Programmiergerätes (PG) und mittels einer Schnittstellenverbindung die zumindest eine Anwendung auf die zumindest eine industrielle Steuerung (PLC) zugreift, und
wobei ein Zugriff des ersten Computers (PC) auf die zumindest eine Anwendung über eine Netzwerkverbindung vorgesehen ist,
wobei vorgesehen ist, dass in einem ersten Schritt von dem ersten Computer (PC) zu der virtuellen Maschine (VM) eine Remote-Desktop-Protocol - RDP - (RDP-C) Verbindung aufgebaut wird,
**dadurch gekennzeichnet, dass**
weiter vorgesehen ist, dass
in einem zweiten Schritt von der virtuellen Maschine (VM) zu dem ersten Computer (PC) über einen virtuellen Kanal (RDP-VC) der Remote-Desktop-Protocol - RDP - (RDP-C) Verbindung der zumindest einen Anwendung zumindest eine Kommunikationsbeziehung des ersten Computers (PC) zu der industriellen Steuerung (PLC)als eine lokale Kommunikationsbeziehung zur Verfügung gestellt wird.

## Claims

1. Method for the access of a first computer (PC) to at least one application installed on a virtual machine (VM) of a second computer via a network connection,
wherein a programming device (PG) of an industrial automation arrangement is used as the first computer (PC), wherein the programming device (PG) is connected to at least one industrial controller (PLC) by means of an automation network,
wherein the at least one application accesses the at least one industrial controller (PLC) by means of the programming device (PG) and by means of an interface connection, and wherein, at a first step, a Remote Desktop Protocol - RDP - connection (RDP-C) is established from the first computer (PC) to the virtual machine (VM),
**characterized in that**,
at a second step, at least one communication relation of the first computer (PC) to the industrial controller (PLC) is made available to the at least one application as a local communication relation from the virtual machine (VM) to the first computer (PC) via a virtual channel (RDP-VC) of the Remote Desktop Protocol - RDP - (RDP-C) connection.

2. Method according to Patent Claim 1,
**characterized in that**,
prior to the first step, a software (CC) is installed on the first computer (PC) and on the virtual machine (VM) respectively to manage the information to be transmitted via the virtual channel (RDP-VC) of the communication relation.

3. Method according to Patent Claim 2,
**characterized in that**
the at least one communication relation to the at least one industrial controller is detected by the software (CC) installed on the first computer and is made accessible by means of the virtual channel (RDP-VC) of the software (CC) installed on the second computer, and
**in that** the software (CC) installed on the second computer makes this at least one communication relation of the application accessible.

4. Method according to Patent Claim 3,
**characterized in that**
the first and the second computer respectively have an operating system each with an operating system extension, wherein the software (CC) installed on the first computer is connected to the operating system extension of the first computer and the software (CC) installed on the second computer is connected to the operating system extension of the second computer.

5. Method according to any one of the preceding patent claims,
**characterized in that**
the virtual channel (RDP-VC) or another virtual channel (RDP-VC) of the Remote Desktop connection - RDP - (RDP-C) is used for the access of the at least one application to a server service of the first computer (PC).

6. Method according to Patent Claim 5,
**characterized in that**
a service to provide licenses, in particular for licenses to use the at least one application, is used as the server service.

7. Method according to any one of the preceding patent claims,
**characterized in that**
an engineering system (TIAP) is used as the at least one application for industrial automation arrangements.

8. Arrangement with a first computer (PC) and a second computer with a virtual machine (VM),
wherein at least one application is installed on the virtual machine (VM),
wherein the first computer (PC) is a programming device (PG) of an industrial automation arrangement, wherein the programming device (PG) is connected to at least one industrial controller (PLC) by means of an automation network,
wherein, by means of the programming device (PG) and by means of an interface connection, the at least one application accesses the at least one industrial controller (PLC), and
wherein an access of the first computer (PC) to the at least one application is provided via a network connection,
wherein it is provided that, at a first step, a Remote Desktop Protocol - RDP - (RDP-C) connection is established from the first computer (PC) to the virtual machine (VM),
**characterized in that**
it is furthermore provided that,
at a second step, at least one communication relation of the first computer (PC) to the industrial controller (PLC) is made available to the at least one application as a local communication relation from the virtual machine (VM) to the first computer (PC) via a virtual channel (RDP-VC) of the Remote Desktop Protocol - RDP - (RDP-C) connection.

## Revendications

1. Procédé d'accès d'un premier ordinateur (PC) à au moins une application installée sur une machine (VM) virtuelle d'un deuxième ordinateur par l'intermédiaire d'une liaison de réseau,
dans lequel on utilise comme premier ordinateur (PC) un appareil (PG) de programmation d'un équipement d'automatisation industrielle, l'appareil (PG) de programmation étant relié à au moins une commande (PLC) industrielle au moyen d'un réseau d'automatisation,
dans lequel, au moyen de l'appareil (PG) de programmation et au moyen d'une liaison d'interface, la au moins une application accède à la au moins une commande (PLC) industrielle et dans lequel dans un premier stade, il est établi par le premier ordinateur (PC) avec la machine (VM) virtuelle une liaison Remote-Desktop-Protocol - RDP (RDP-C), **caractérisé**
**en ce que** dans un deuxième stade, il est mis, de la machine (VM) virtuelle au premier ordinateur (PC) par l'intermédiaire d'un canal (RDP-VC) virtuel de la liaison Remote-Desktop-Protocol - RDP - (RDP-C) de la au moins une application, à disposition, sous la forme d'une relation de communication locale, au moins une relation de communication du premier ordinateur (PC) avec la commande (PLC) industrielle.

2. Procédé suivant la revendication 1,
**caractérisé**
**en ce que**, avant le premier stade, on installe sur le premier ordinateur (PC) et sur la machine (VM) virtuelle respectivement un logiciel (CC) de gestion des informations, à transmettre par le canal (RDP-VC) virtuel, de la relation de communication.

3. Procédé suivant la revendication 2,
**caractérisé**
**en ce que**, par le logiciel (CC) installé sur le premier ordinateur, on détecte la au moins une relation de communication avec la au moins une commande industrielle et au moyen du canal (RDP-VC) virtuel on rend accessible le logiciel (CC) installé sur le deuxième ordinateur et
**en ce que** le logiciel (CC) installé sur le deuxième ordinateur rend cette au moins une relation de communication accessible à l'application.

4. Procédé suivant la revendication 3,
**caractérisé**
**en ce que** le premier et le deuxième ordinateurs ont chacun un système de fonctionnement ayant chacun une extension de système de fonctionnement, le logiciel (CC) installé sur le premier ordinateur étant relié à l'extension de système de fonctionnement du premier ordinateur et le logiciel (CC) installé sur le deuxième ordinateur étant relié à l'extension de système de fonctionnement du deuxième ordinateur.

5. Procédé suivant l'une des revendications précédentes,
**caractérisé**
**en ce qu'**on utilise le canal (RDP-VC) virtuel ou un autre canal (RDP-VC) virtuel de la liaison Remote Desktop - RDP - (RDP-C) pour l'accès de la au moins une application à un service de serveur du premier ordinateur (PC).

6. Procédé suivant la revendication 5,
**caractérisé**
**en ce que** l'on utilise comme service de serveur un service de mise à disposition de licences, notamment de licences d'utilisation de la au moins une application.

7. Procédé suivant l'une des revendications précédentes,
**caractérisé**
**en ce que** l'on utilise comme la au moins une application un système (TIAP) d'ingénierie pour des équipements d'automatisation industrielle.

8. Equipement comprenant un premier ordinateur (PC) et un deuxième ordinateur ayant une machine (VM) virtuelle,
dans lequel au moins une application est montée sur la machine virtuelle (VM),
dans lequel le premier ordinateur (PC) est un appareil (PG) de programmation d'un équipement d'automatisation industrielle, l'appareil (PG) de programmation étant relié à au moins une commande (PLC) industrielle au moyen d'un réseau d'automatisation,
dans lequel au moyen de l'appareil (PG) de programmation et au moyen d'une liaison d'interface, la au moins une application accède à la au moins une commande (PLC) industrielle et
dans lequel il est prévu un accès du premier ordinateur (PC) à la au moins une application par l'intermédiaire d'une liaison de réseau,
dans lequel il est prévu que dans un premier stade, on établisse une liaison Remote-Desktop-Protocol - RDP - (RDP-C) du premier ordinateur (PC) avec la machine (VM) virtuelle,
**caractérisé en ce que**
il est prévu en outre,
dans un deuxième stade, de mettre à disposition, de la machine (VM) virtuelle au premier ordinateur (PC), par l'intermédiaire d'un canal (RDP-VC) virtuel de la liaison Remote-Desktop-Protocol - RDP - (RDP-C) de la au moins une application, au moins une relation de communication du premier ordinateur (PC) avec la commande (PLC) industrielle sous la forme d'une relation de communication locale.
